Europäisches Patentamt

European Patent Office

Office européen des brevets

(11) Veröffentlichungsnummer: **0 266 701 B1**

(12) **EUROPÄISCHE PATENTSCHRIFT**

| | |
|---|---|
| (45) Veröffentlichungstag der Patentschrift: **24.06.92** | (51) Int. Cl.⁵: **A01G 9/00,** E04D 11/00, E01F 8/00, E04D 7/00 |
| (21) Anmeldenummer: **87116013.1** | |
| (22) Anmeldetag: **30.10.87** | |

(54) **Substratanordnung zur Dachbegrünung sowie Verfahren zu deren Herstellung.**

(30) Priorität: **04.11.86 DE 3637463**

(43) Veröffentlichungstag der Anmeldung:
**11.05.88 Patentblatt 88/19**

(45) Bekanntmachung des Hinweises auf die
Patenterteilung:
**24.06.92 Patentblatt 92/26**

(84) Benannte Vertragsstaaten:
**AT BE CH DE ES FR GR IT LI LU NL**

(56) Entgegenhaltungen:
**EP-A- 0 077 510**
**DE-A- 2 636 918**
**DE-A- 3 502 296**
**GB-A- 1 475 994**

**KUNSTSTOFFE IM BAU, vol. 13, no. 2, 1978,
Seite 58: "Dachbegrünung mit Pflanzelementen aus PS 30 SE-Hartschaum"**

(73) Patentinhaber: **FRÄNKISCHE ROHRWERKE,
GEBR. KIRCHNER GmbH & Co.
Hellinger Strasse 1
W-8729 Königsberg/ Bayern(DE)**

(72) Erfinder: **Braun, Franz-Josef
Holzhausen 24 1/2
W-8729 Königsberg i. Bayern(DE)**

(74) Vertreter: **Schwabe - Sandmair - Marx
Stuntzstrasse 16
W-8000 München 80(DE)**

# Beschreibung

Die Erfindung betrifft eine Substratanordnung zur Dachbegrünung gemäß dem Oberbegriff des Anspruchs 1, ein Verfahren zur Herstellung dieser Substratanordnung, sowie eine Trägerplatte für eine solche Substratanordnung.

Unter "Dachbegrünung" wird jede flächige Anpflanzung in einem Substrat verstanden, welches mit dem Erdboden und somit dem Grundwasser nicht in Verbindung steht. Eine solche Dachbegrünung bildet somit nicht nur Ziergärten auf den Dächern von Wohn- und Geschäftshäusern, sondern deckt auch die Dächer von Tiefgaragen und anderen unterirdischen Einrichtungen ab.

Der besondere Vorteil einer Dachbegrünung liegt nicht nur in der ästethischen Wirkung und der Klimaverbesserung, sondern besonders auch in der wärmedämmenden Wirkung der Dachbegrünung. Hierbei sind jene Temperaturschwankungen, denen die unter der Dachbegrünung liegende Konstruktion ausgesetzt ist, so stark verringert, daß folgerichtig die Dachabdichtung wesentlich geringer durch Temperaturschwankungen belastet wird.

Um die Gewichtsbelastung der Dachkonstruktion so niedrig wie möglich zu halten, trachtet man danach, eine möglichst dünne Substratschicht zu verwenden, welche den eigentlichen Bewuchs trägt und im folgenden allgemein mit "Vegetationssubstrat" bezeichnet wird. Diese Schicht hat daher nur eine verhältnismäßig geringe Aufnahme- und Speicherwirkung für Wasser.

Es ist daher einerseits erforderlich, für eine einwandfreie Dränage zu sorgen, damit auch bei einem großen Gewitter- oder Platzregen sich auf der Dachabdichtung kein hydrostatisch drückendes Wasser ansammelt. Andererseits ist es erforderlich, daß eine gewisse Menge an Wasser gespeichert wird, um das Austrocknen des Vegetationssubstrates und damit Ausfälle in der Pflanzung zu vermeiden.

Ferner ist darauf zu achten, daß das Vegetationssubstrat an seiner Oberfläche durch ablaufendes Wasser möglichst nicht weggespült wird.

Bei der Speicherung von Wasser ist dafür zu sorgen, daß im Bereich der Pflanzen wurzeln stets ein hinlänglicher Luftanteil vorliegt; ist dies z.B. infolge Wasserübersättigung nicht der Fall, führt dies zu Ausfällen beim Bewuchs.

Schließlich sollte die gesamte Substratanordnung ihrerseits bevorzugt auch noch möglichst tragfähig sein, um auch das Befahren z.B. durch gartenbearbeitende Geräte wie Rasenmäher und dergleichen zu ermöglichen, soweit dies die Art der Bepflanzung erforderlich macht.

Es ist bereits bekannt, zur Wasserspeicherung und Dränage unterhalb des Vegetationssubstrates eine Wasserspeicherschicht aus offenporigem Hartschaumstoff anzuordnen, deren Porengröße so bemessen ist, daß diese Schicht wie ein Schwamm eine große Menge an Wasser aufnimmt und zurückhält, überschüssiges Wasser aber nach unten hindurchsickern läßt. Unterhalb dieser Wasserspeicherschicht ist eine Dränageschicht angeordnet, die dazu dient, das Wasser möglicht rasch vom Dach abzuleiten.

Diese Substratanordnung hat sich zwar im Gebrauch bewährt, ist aber nicht in jenen Fällen einsetzbar, in denen eine größere Tragfähigkeit erforderlich ist, da die Tragfähigkeit der Wasserspeicherschicht verhältnismäßig gering ist, und da, wie bereits oben erwähnt, die oft dünnen Schichten aus Vegetationssubstrat nicht für eine hinlängliche kraftverteilende Wirkung sorgen, so daß die auf das Vegetationssubstrat aufgebrachte Belastung im wesentlichen unverändert auf den Hartschaumstoff auftrifft.

Diesen Nachteil hilft die gattungsgemäße, bekannte Substratanordnung (DE-A-35 02 296) dadurch ab, daß sie eine Trägerplatte verwendet, die nach oben offene Wasserspeicherkammern aufweist. Oberhalb der Trägerplatte befindet sich das Vegetationssubstrat, während unterhalb der Trägerplatte eine Dränagezone angebracht ist. In die Wasserspeicherkammern taucht ein Dochtlappen ein, der mit einem über die Trägerplatte gelegten Bewässerungsvlies in Berührung steht.

Bei der Bewässerung füllen sich die Wasserspeicherkammern mit Wasser, bis sie gefüllt sind. Bei weiterer Bewässerung läuft das Wasser über die Wasserspeicherkammern über und gelangt durch Kanäle von der Oberseite der Trägerplatte nach unten in die Dränagezone.

Das die Substratanordnung tragende Dach muß, um eine Dränage zu ermöglichen, abschüssig verlegt sein. Da sich in den Wasserpeicherkammern ein freier Wasserspiegel einstellt, müssen diese verhältnismäßig klein sein, um zu verhindern, daß bei abschüssig verlegter Trägerplatte das Speichervolumen der Wasserspeicherkammern drastisch verringert wird. Aus diesem Grund ist die bekannte Substratanordnung zur Begrünung von Schrägdächern auch ungeeignet.

Gleiches gilt auch für ähnliche Substratanordnungen, die mit Wasserstau arbeiten und bei denen sich innerhalb einer geröllartigen Schicht, die beispielsweise aus Blähtonkörpern gebildet ist, wie bei einer Hydrokultur ein Wasserstand einstellt.

Solche Substratanordnungen haben natürlich auch Abdichtungsprobleme; wenn eine Wasserspeicherkammer oder ein größerer Wasserspeicherraum undicht wird, läuft das Wasser ab, so daß letztlich die Wasserversorgung der Bepflanzung nicht mehr an allen Stellen voll sichergestellt ist.

Bei einer höheren Belastung der bekannten Substratanordnung wird Wasser aus dem Dochtlappen und dem Bewässerungsvlies ausgepreßt und fließt nur zum Teil in die Wasserspeicherkammern zurück. Bei häufig wiederholter Belastung werden somit die Wasserspeicherkammern regelrecht leergepumpt.

Ausgehend von diesem Stand der Technik liegt der Erfindung die Aufgabe zugrunde, die bekannte Substratanordnung dahingehend weiterzubilden, daß bei gleichbleibender Tragfähigkeit und Belastbarkeit die Speicherfähigkeit verbessert wird, und zwar ungeachtet häufiger Belastung, und ferner die Möglichkeit geschaffen wird, die Substratanordnung auch auf stärker geneigtem Untergrund zu verlegen.

Diese Aufgabe wird durch die Merkmale des Anspruchs 1 gelöst.

Hierbei sind die Wasserspeicherkammern erfindungsgemäß aus einem schwammartigen Füllkörper aus verrottungssicherem, offenporigem, wasseraufsaugendem Schaumstoff ausgefüllt, der im wesentlichen bündig mit der Oberkante der tragenden Wände der Trägerplatte abschließt. Die Wasserspeicherkammern weisen Bodenöffnungen zur Dränagezone hin auf.

Der Füllkörper wirkt wie ein Schwamm, der Wasser bis zu seiner Sättigung aufnimmt. Wird von oben her weiter Wasser zugeführt, dann tritt die entsprechende Menge des Wassers auf der Unterseite des Füllkörpers wieder aus und gelangt durch die Bodenöffnungen der Wasserspeicherkammern in die Dränagezone.

Hierbei verbleibt jedoch im Füllkörper selbst bei seiner Sättigung stets ein gewisser Luftanteil, so daß die Gefahr von Luftmangel völlig ausgeschlossen ist.

Das Speichervermögen des Füllkörpers ist im wesentlichen unabhängig von seiner räumlichen Lage, so daß die erfindungsgemäße Substratanordnung auch auf stark abschüssigen Unterlagen verlegt werden kann, soweit sichergestellt ist, daß das überschüssige Wasser noch durch Schwerkraftwirkung zu den Bodenöffnungen austritt.

Infolge dieser Wirkung des Füllkörpers ist es auch möglich, die Wasserspeicherkammern zu vergrößern, so daß das gesamte Speichervolumen der Trägerplatte vergrößert werden kann, soweit deren Tragfähigkeit nicht beeinträchtigt ist.

Aufgrund der Kapillarwirkung wird im Füllkörper auch das Wasser nach oben gefördert, wenn das über dem Füllkörper liegende Vegetationssubstrat trocken sein sollte. Andererseits wird bei zu hohem Wasseraufkommen das Wasser stets im wesentlichen in vertikaler Richtung in die Dränagezone abgeleitet; eine Querströmung an der Unterseite des Vegetationssubstrates, wie sie beim Überlauf der Wasserspeicherkammern der gattungsbildenden Substratanordnung möglich ist, wird somit vermieden, so daß das Vegetationssubstrat dort auch nicht weggespült werden kann.

Bei der erfindungsgemäßen Substratanordnung kann praktisch jede beliebige Belastbarkeit eingestellt werden, und zwar durch eine geeignete Wahl des Materials der Trägerplatte und durch geeignete Wahl des Querschnitts der Wasserspeicherkammern.

Die Wände der Wasserspeicherkammern können über ihre Höhe hinweg eine gleichbleibende Breite aufweisen, was den Vorteil hat, daß auf diese Weise ein besonders großes Volumen für die Wasserspeicherkammern gebildet wird.

Um ein Ausknicken der Wände bei hoher Belastung zu vermeiden, sind diese jedoch gemäß einer bevorzugten Ausgestaltung der Erfindung zur Unterseite der Trägerplatte hin verbreitert, so daß sich nach unten verjüngende Wasserspeicherkammern gebildet werden. Es stellt somit die Trägerplatte ein sehr tragfähiges Gebilde dar, daß dennoch einen hohen Volumenanteil für die Wasserspeicherkammern erübrigt, so daß einerseits hohe Wasserspeicherwirkung und andererseits hohe Tragfähigkeit gewährleistet sind.

Je nach Belastungsart können die Wasserspeicherkammern gemäß einer weiteren, bevorzugten Ausgestaltung der Erfindung quadratischen, wabenförmigen oder auch runden Querschnitt aufweisen, wobei insbesondere eine Trägerplatte mit runden Wasserspeicherkammern geeignet ist, auch zu ihrer Oberfläche geneigte Kräfte aufzunehmen, wie sie beim Begehen oder Befahren einer abschüssigen Dachbegrünung auftreten. Um besonders in diesem Fall die Knickfestigkeit der Wände noch weiter zu erhöhen, sind diese an den bodenseitigen Kanten der Wasserspeicherkammern ausgerundet.

Die Öffnungen im Boden der Wasserspeicherkammern sollten grundsätzlich verhältnismäßig klein sein, um zu erreichen, daß der Füllkörper möglichst flächig aufliegt, damit durch Vermeiden örtlicher Überlastungen eine möglichst hohe Speicherkapazität des Füllkörpers gewährleistet ist. Es wäre somit grundsätzlich zweckmäßig, im Boden mehrere kleinere Öffnungen vorzusehen.

Gemäß einer bevorzugten Ausgestaltung der Erfindung ist es jedoch von Vorteil, jeden Boden nur mit einer einzigen Öffnung zu versehen, die groß genug ist, daß sie nicht beim Verlegen der Trägerplatte versehentlich verstopft wird.

Soweit die Füllkörper in der Trägerplatte befestigt sind, können sie selbst zur Verankerung von Wurzeln dienen, welche in die Poren der Füllkörper einwachsen, ohne dadurch aber zur Verwurzelung der gesamten Wasserspeicherkammer zur führen, wie dies bei der gattungsbildenden Substratanordnung der Fall sein kann. Gemäß einer bevorzugten Ausgestaltung der Erfindung ist aber eine zusätzliche Wurzelverankerungsschicht vorgesehen, die nicht nur dazu dient, den Wurzeln Halt zu bieten, sondern auch verhindert, daß Kräfte über die Wurzeln und das Substrat in die Füllkörper eingeleitet werden, welche dazu führen könnten, daß Wasser aus den Füllkörpern ausgepreßt wird und damit Wasserspeichervolumen verlorengeht.

Eine solche Wurzelverankerungsschicht ist bevorzugt aus einem grobmaschingen Gewebe, Gewirk oder Gitter aus Kunststoff oder sonstigem Material, bevorzugt aus einem Polyolefin, gebildet. Ein solches grobmaschiges Gewebeverbessert dann, wenn es kräftig verwurzelt ist, die Standsicherheit der Pflanzen.

Die Wurzelverankerungsschicht kann oberhalb der Trägerplatte angeordnet sein und im Vegetationssubstrat entweder lose verlegt oder punktweise an der Trägerplatte bzw. einzelnen Trägerplatten befestigt sein. Gemäß einer bevorzugten Ausgestaltung der Erfindung ist aber die Wurzelverankerungsschicht unmittelbar an der Oberseite der Füllkörper befestigt. Hierbei nimmt die Wurzelverankerungsschicht dann, wenn sie stark verwurzelt ist, den größten Anteil der in die Wurzeln eingeleiteten Kräfte auf und überträgt sie in die Wände der Trägerplatte. Gleichzeitig greifen die Wurzelspitzen in die Poren der Füllkörper ein, so daß bei einer Austrocknung des Vegetationssubstrats von oben her die Bewässerung der Pflanzen so lange gewährleistet bleibt, so lange in den Füllkörpern noch Wasser gespeichert ist.

Es ist gemäß einer weiteren Ausgestaltung der Erfindung entweder zweckmäßig, die Filterschicht unterhalb der Öffnungen der Trägerplatte anzuordnen oder die Größe der Porenöffnungen der Füllkörper so einzustellen, daß diese Füllkörper ihrerseits als Filter wirken und das Eindringen feiner Partikel aus dem Vegetationssubstrat verhindern. Bei diesen filterstabilen Füllkörpern kann auf ein Filtervlies verzichtet werden, wenn der Stoßkantenbereich abgedichtet ist.

Die Trägerplatte kann ihrerseits aus einem Kunststoffschaum bestehen, der gegebenenfalls auch offenporig sein kann und seinerseits wasserspeichernde Fähigkeit aufweist; die Fähigkeit der Wasserspeicherung tritt jedoch zurück gegenüber der Belastbarkeit. Es ist auch möglich, die Trägerplatte und deren Wände nicht aus massivem Schaumstoff zu bilden, sondern aus einer Folie bzw. Platte zu formen, wobei diese Folie oder Platte ein massives Kunststoffmaterial oder gegebenenfalls auch ein geschäumtes Kunststoffmaterial sein kann.

Obwohl Polystyrolschaum als Material der Trägerplatte besonders vorteilhaft erscheint, ist es grundsätzlich auch möglich, völlig andere Materialien für die Trägerplatte zu verwenden, beispielsweise Beton mit Zuschlagstoffen (z.B.EPS, Stroh) oder ohne diese, Metallblech und dergleichen.

Auch die Füllkörper können aus den verschiedensten Materialien bestehen, soweit sie die angestrebte, schwammähnliche Wirkung entfalten, da die Füllkörper ihrerseits bei entsprechender Dimensionierung der Wasserspeicherkammern keinerlei oder nur geringe Kräfte aufzunehmen brauchen. Bevorzugt wird jedoch Polyurethan-Hartschaum, bei welchem die geeignete Porengröße sich ohne weiteres einstellen läßt und der auch über Jahre hinaus völlig verrottungssicher ist.

Gemäß einer weiteren, bevorzugten Ausgestaltung der Erfindung sind, wie auch bei der gattungsbildenden Substratanordnung, die Ränder der Trägerplatten so ausgebildet, daß sie komplementär die Ränder benachbarter Trägerplatten unter. bzw. übergreifen. Während aber auch bei der gattungsbildenden Substratanordnung überlaufendes Wasser durch Kanäle in den Trägerplatten zur Dränagezone geleitet werden muß, so daß die Randfugen zwischen benachbarten Trägerplatten ebenfalls solche Kanäle bilden, ist bei der erfindungsgemäßen Substratanordnung der Rand benachbarter Trägerplatten gegebenenfalls noch unter Einformung einer Dichtungsrille so ausgebildet, daß eine möglichst gute Abdichtung gegenüber Wasser stattfindet, um zu erreichen, daß alles auf die Substratanordnung gelangende Wasser durch die Füllkörper hindurchströmen muß, um diese möglichst gesättigt zu erhalten.

Im übrigen liegt eine weitere Ausgestaltung der Erfindung darin, daß Wände zwischen benachbarten Wasserspeicherkammern an ihrer Oberseite eine Einkerbung aufweisen; wenn nämlich, wie weiter unten beschrieben, in einem kontinuierlichen Vorgang zur Bildung der Füllkörper Schaum in die Wasserspeicherkammern eingefüllt wird, dann bildet dieser Schaum zwischen zwei benachbarten kammern eine Raupe, welche über eine Wand hinweg verläuft und der Belastung ausgesetzt ist. Durch eine entsprechende Einkerbung an diese Stelle der Wand bleibt diese Raupe unbelastet.

Die Erfindung betrifft auch ein Verfahren zur möglichst einfachen Herstellung der obenbeschriebenen erfindungsgemäßen Substratanordnung.

Es wäre grundsätzlich möglich, einerseits die Trägerplatten und andererseits die Füllkörper in getrennten Vorgängen zu verformen und die Füllkörper dann in die Trägerplatten einzustecken, einzukleben oder sonstwie einzubringen. Gemäß einer bevorzugten Ausgestaltung der Erfindung wird aber zunächst die Trägerplatte entweder so hergestellt, daß der Boden der Wasserspeicherkammern geschlossen ist. In diese so geschlossenen Wasserspeicherkammern wird nun Kunststoff eingefüllt, der in den Wasserspeicherkammern aufschäumt, und zwar in einer solchen Menge, daß die Wasserspeicherkammern mindestens vollständig gefüllt sind. Bei Verwendung von Polyurethanschaumstoff ergibt sich der zusätzliche Vorteil, daß dieser stark klebrig ist, so daß er fest an den Wänden der Wasserspeicherkammern anhaftet.

Anschließend werden die verschlossenen Öffnungen im Boden der Wasserspeicherkammern geöffnet, und zwar entweder durch Abnahme der Trägerplatte von einer entsprechend geformten Vorrichtung oder durch Aussägen, Ausstanzen, Ausschneiden, Ausfräsen oder sonstiges Ausarbeiten an einer nachgeschalteten Bearbeitungsstation.

Soweit sich an der Oberfläche des durch Ausschäumen gebildeten Füllkörpers eine geschlossene Haut bildet, wie dies bei manchen Schaumstoffen der Fall ist, werden anschließend wieder die Poren geöffnet oder Perforierungen in diese Oberflächenhaut eingebracht. Wenn der Füllkörper über die Trägerplatte übersteht, dann ist es z.B. möglich, den überstehenden Teil abzuschneiden, wobei gleichzeitig offene Poren hergestellt werden. Gemäß einer bevorzugten Ausgestaltung der Erfindung ist es aber besonders von Vorteil, in die Oberflächenhaut des Füllkörpers Öffnungen mittels einer Nadelwalze einzubringen, wobei diese Öffnungen nun so bemessen sein können, daß sie trotz Verwendung eines großporigen Füllkörper-Schaumstoffes das Eindringen feiner Partikel aus dem Vegetationssubstrat verhindern und filterstabil sind.

Gemäß einer weiteren Ausgestaltung des erfindungsgemäßen Verfahrens wird das die Wurzelverankerungsschicht bildende grobe Gewebe oder Gitter vor dem Ausschäumen der Wasserspeicherkammern auf die Trägerplatte aufgebracht, wobei durch diese Wurzelverankerungsschicht hindurch der Aufschäumvorgang erfolgt. Hierzu ist es allerdings erforderlich, die Wurzelverankerungsschicht niederzuhalten, damit sie nicht von dem nach oben drückenden Schaum abgedrängt wird. Zum Niederhalten halten ist es möglich, die Wurzelverankerungsschicht vorher an der Trägerplatte festzuheften; es ist auch möglich, mittels Walzen die Wurzelverankerungsschicht niederzuhalten. Wegen des hohen Klebevermögens von Polyurethanschaum ist es allerdings zweckmäßig, zwischen den Walzen und der Trägerplatte eine haftungsverhindernde Folie anzubringen, welche als Schutzfolie auf der Trägerplatte verbleiben kann und erst nach deren Einbau abgezogen zu werden braucht.

Gemäß einer anderen Ausgestaltung der Erfindung ist es auch möglich, die Wurzelverankerungsschicht in den noch nicht ausgehärteten Schaumstoff einzudrücken, was ebenfalls mittels Walzen unter Zwischenlage einer Folie geschehen kann.

Es ist grundsätzlich möglich, die Komponenten des Schaumstoffes getrennt in die Wasserspeicherkammern einzubringen und erst darin das Aufschäumen einzuleiten. Gemäß einer bevorzugten Ausgestaltung der Erfindung wird jedoch bereits ein vorgemischtes, schäumbares Material kontinuierlich aus einem Misch- und Dosierkopf in die unter ihm vorbeigeführten Wasserspeicherkammern eingebracht, in denen der bereits eingeleitete Aufschäumungsvorgang fertiggestellt wird.

Ein solcher Kurvenzug ermöglicht bei verhältnismäßig langsamer Bewegung der Füllung aller Wasserspeicherkammern mittels eines einzigen Misch- und Dosierkopfes.

Beim Gebrauch der erfindungsgemäßen Substratanordnung bildet sich, eine genügend hohe Dicke des Vegetationssubstrates vorausgesetzt, über jeder Wasserspeicherkammer nach längerer Zeit eine gewölbeartige Spannungsverteilung, welche sicherstellt, daß alle aufgebrachten Kräfte in die Wände der Trägerplatte eingeleitet werden.

Der Gegenstand der Erfindung wird anhand der beigefügten, schematischen Zeichnung beispielsweise noch näher erläutert; in dieser zeigt:

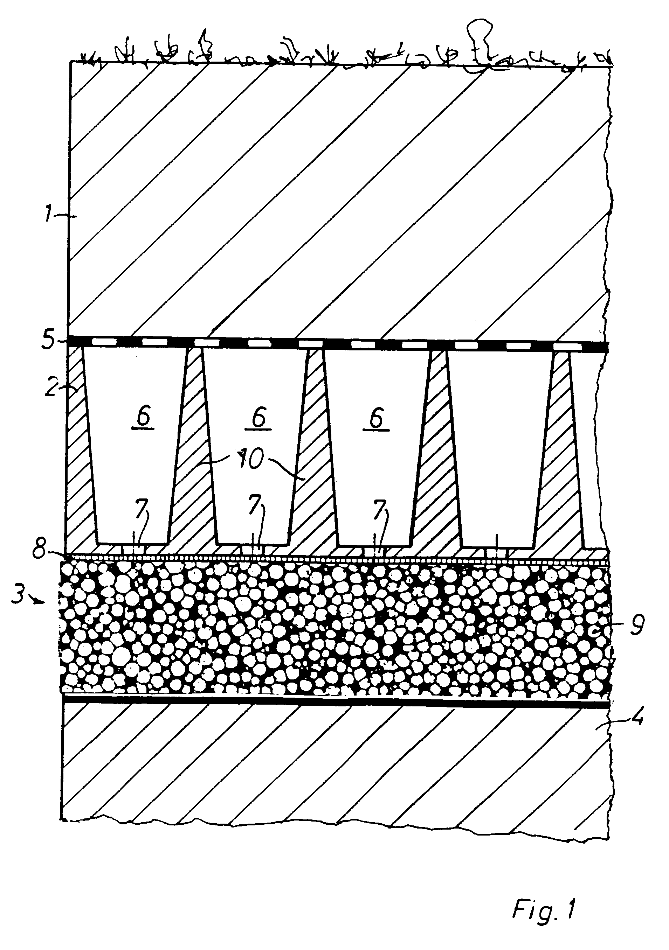

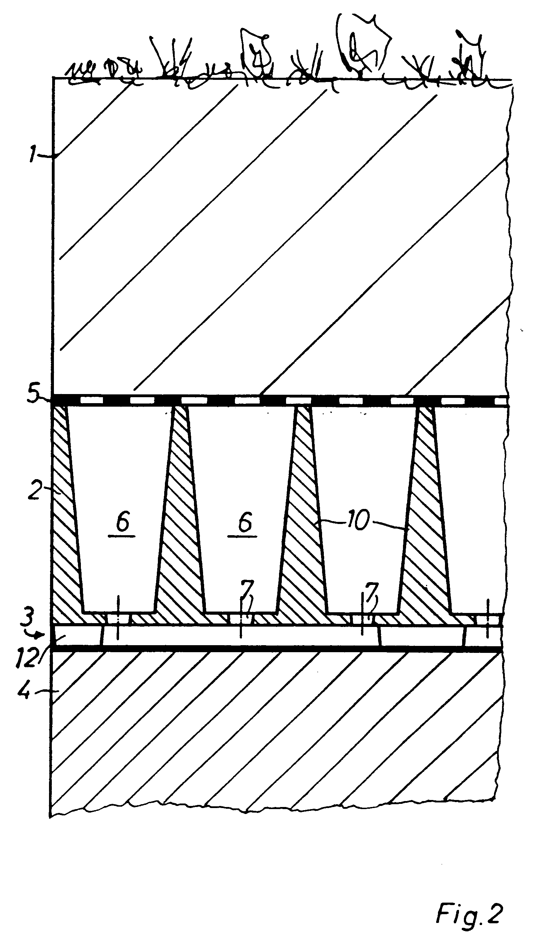

Fig. 1
eine erfindungsgemäße Substratanordnung im Querschnitt,
Fig. 2
eine weitere Ausführungsform einer erfindungsgemäßen Substratanordnung,
Fig. 3
den Querschnitt einer bevorzugten Form von Wasserspeicherkammern, wie sie in der Anordnung der Fig. 1 und 2 verwendet werden können,
Fig. 4a und b
die Querschnitte durch weitere Ausbildungen einer Wasserspeicherkammer,
Fig. 5a, 5b und 5c
die Draufsicht auf unterschiedliche Ausführungsformen von Trägerplatten, und
Fig. 6a und 6b
unterschiedliche Ausführungsformen der Randausbildung der erfindungsgemäßen Trägerplatte.

In Fig. 1 ist ein erstes Ausführungsbeispiel einer Substratanordnung gezeigt, mit einer aus einem Vegetationssubstrat gebildeten Schicht 1, einer diese tragenden Trägerplatte 2 und einer unter dieser angeordneten Dränagezone 3. Diese Substratanordnung ruht auf einer Dachkonstruktion 4.

Die gezeigte Vegetationssubstratschicht 1 ist etwa 5 bis 20 cm dick und in dieser dicke nur zur extensiven Begrünung (Rasen, Käruter und dergleichen) geeignet. Wenn eine intensive Begrünung erfolgen soll, etwa durch Büsche, Bäume und dergleichen, dann ist die Dicke der Vegetationssubstratschicht auf etwa 20 bis 60 cm zu erhöhen.

Auf der der Vegetationssubstratschicht 1 zugewandten Fläche der Trägerplatte 2 ist an dieser ein Wurzelverankerungsgewebe 5 angebracht, welches z.B. von einem grobmaschigen Polyethylen-Gewirk gebildet ist.

In der Trägerplatte 2 sind Wasserspeicherkammern 6 ausgebildet, deren Breite von oben nach unten abnimmt und die nach unten weitgehend geschlossen sind. Die Wasserspeicherkammern 6 sind durch Füllkörper vollständig ausgefüllt, die der deutlicheren Darstellung nach in der Zeichnung nicht gezeigt sind.

Im Boden weist jede Wasserspeicherkammer 6 eine Öffnung 7 auf, deren Durchmesser wesentlich kleiner ist als jener des Bodens.

Durch die Öffnungen 7 sind die Wasserspeicherkammern 6 mit der unteren Oberfläche der Trägerplatte 2 verbunden.

Die Trägerplatte 2 sitzt auf einer Filtervliesschicht 8 auf, welche ihrerseits auf einer so grobporigen Schicht 9 aufliegt, daß in den Poren das Wasser nicht zurückgehalten wird, sondern ungehindert ablaufen kann.

Die die einzelnen Wasserspeicherkammern voneinander trennenden Wände 10 verbreitern sind nach unten und sind so stabil ausgebildet, daß sie alle auf das Vegetationssubstrat 1 aufgebrachte Kräfte nach unten in die grobporige Schaumstoffschicht 9 weiterleiten.

Nach längerer Benutzung bildet sich über der Oberseite eines jeden Füllkörpers bzw. einer jeden Wasserspeicherkammer 6 eine kuppelartige Spannungsverteilung, welche dafür sorgt, daß die Kräfte zuverlässig in die Wände 10 und nicht etwa in die Füllkörper eingeleitet werden.

In Fig. 2 ist eine weitere Ausführungsform einer Substratanordnung gezeigt, welche jener der Fig. 1 ähnelt. Gleiche Bezugszeichen zeigen gleiche Elemente, welche bei der Substratanordnung der Fig. 2 nicht im einzelnen erwähnt werden.

Der Hauptunterschied des zweiten Ausführungsbeispiels zum ersten liegt in einer verringerten Höhe der Dränagezone 3; bei dem Ausführungsbeispiel der Fig. 2 ist in der Dränagezone 3 nicht, wie beim Ausführungsbeispiel der Fig. 1, ein Wasser ableitender, groß- und offenporiger Schaumstoff vorgesehen, sondern ein freier Luftspalt mit verhältnismäßig geringer Höhe, die durch Distanzfüße 12 bestimmt und beibehalten wird, welche an der Unterseite der Trägerplatte 2 angeformt sind.

Da die Trägerplatte 2 ihrerseits aus einem sehr tragfähigen Material besteht, genügen verhältnismäßig wenige Distanzfüße 12, so daß sie den Ablauf des Wassers in der Dränagezone 3 nicht behindern.

Die Form der Füllkörper, die in den Wasserspeicherkammern 6 angeordnet sind, stimmt mit jener des Ausführungsbeispiels der Fig. 1 überein; diese Füllkörper weisen jeweils die Form eines Pyramidenstumpfes mit quadratischem Querschnitt auf.

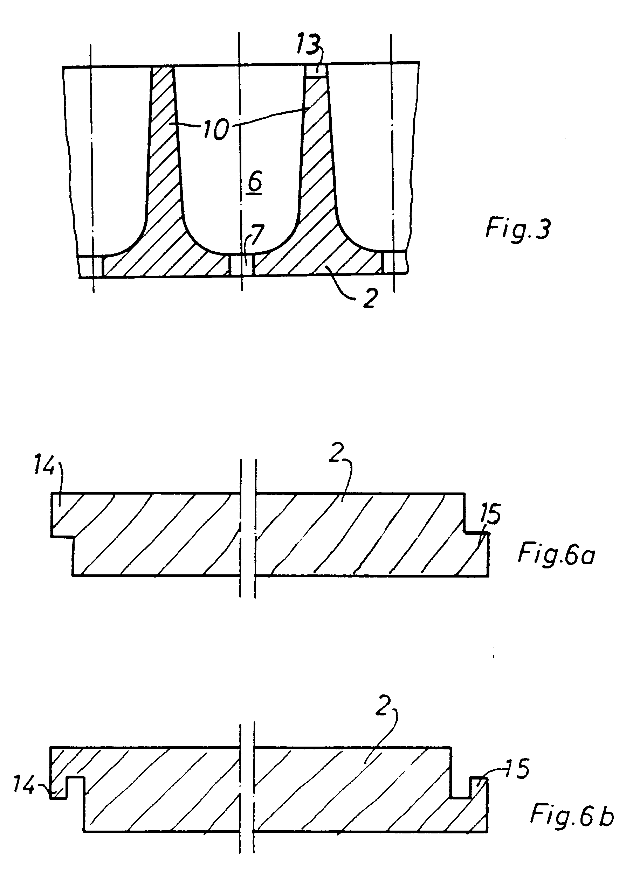

In Fig. 3 sind Wasserspeicherkammern 6 mit einer anderen Ausbildung gezeigt; zu diesen komplementär ist jeder der in Fig. 3 nicht gezeigten Füllkörper- Diese sind kugelstumpfförmig ausgebildet, wobei die Kante zwischen der Umfangsfläche und der kleineren Deckfläche des Kegelstumpfes stark ausgerundet ist. Hierdurch entstehen im unteren Bereich stark verdickte Trennwände 10, welche somit eine erhöhte Knicksicherheit aufweisen und eine ganz besondes hohe Tragfähigkeit für die in Fig. 3 gezeigte Trägerplatte 2 liefern.

Eine weitere Besonderheit der in Fig. 3 gezeigten Trägerplatte 2 besteht in einer Einkerbung 13, die in der Oberseite der zwei benachbarte Wasserspeicherkammern 6 trennenden Wand 10 ausgespart ist.

Beim Herstellen der Trägerplatte kann diese zunächst ohne die Bodenöffnungen 7 geformt werden; anschließend wird die Trägerplatte 2 unter einem nicht gezeigten, kontinuierlich schäumfähiges Material liefernden Dosier- und Mischkopf hindurchgeführt, wobei die Einkerbung 13 beim Vorschub der Trägerplatte 2 gegenüber dem Dosier- und Mischkopf genau unter diesem durchläuft. Da dieser Kopf seinerseits kontinuierlich das schäumfähige Material abgibt, tropft auch etwas von diesem Material in die Einkerbung 13, deren Abmessung so bestimmt ist, daß das in diese Einkerbung gelangende Material nach seinem Aufschäumen die Einkerbung 13 im wesentlichen gerade ausfüllt. Dadurch wird vermieden, daß beim Ausschäumen der Wasserspeicherkammern 6 zwischen jeweils zwei benachbarten Wasserspeicherkammern eine Schaumstoff-Raupe über das Stirnende der jeweiligen Wand 10 hinwegläuft, über die obere Fläche der Trägerplatte 2 übersteht.

Nach Ausschäumen der Wasserspeicherkammern 6 und nach Erstarren des Schaumes werden von unten her die Öffnungen 7 ausgestanzt, mit einem Stirnfräser ausgefräst oder sonstwie eingebracht.

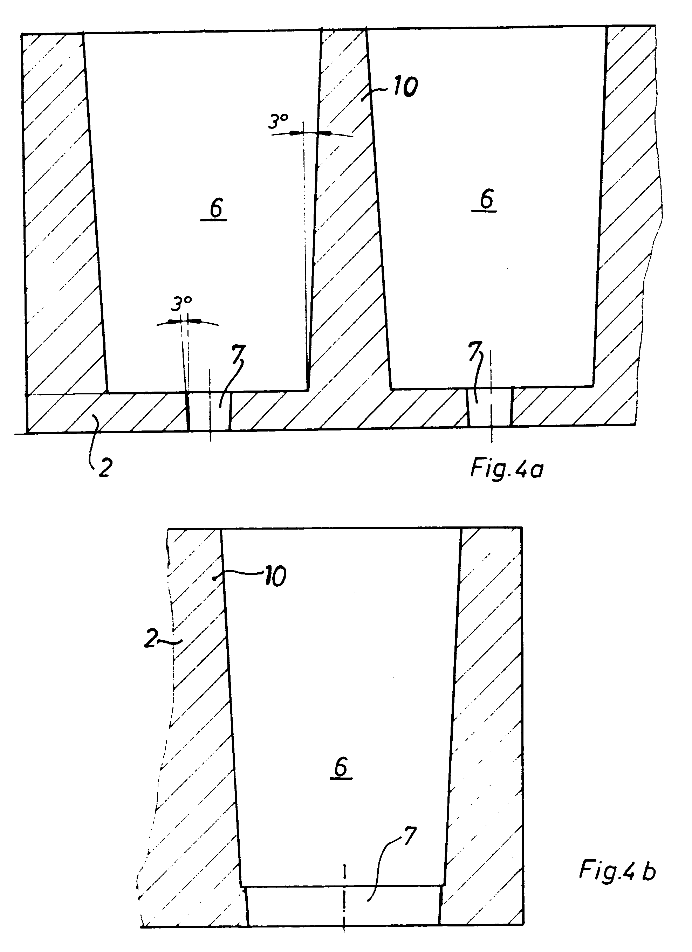

In Fig. 4 sind vergrößert und detaillierter zwei unterschiedliche Wasserspeicherkammern und somit Füllkörper 6 gezeigt, die entweder bei ein und derselben Trägerplatte 2 oder bei verschiedenen Trägerplatten ausgebildet sein können.

Die Füllkörper für die in Fig. 4a und 4b gezeigten Wasserspeicherkammern 6 stimmen in ihren Abmessungen vollständig überein; sie sind pyramidenstumpfförmig.

Die Wasserspeicherkammer der Ausführungsform der Fig. 4b stimmt mit jener der Fig. 4a im wesentlichen übereine, mit Ausnahme des Umstandes, daß die Bodenfläche der Wasserspeicherkammer 6 stark verkleinert ist.

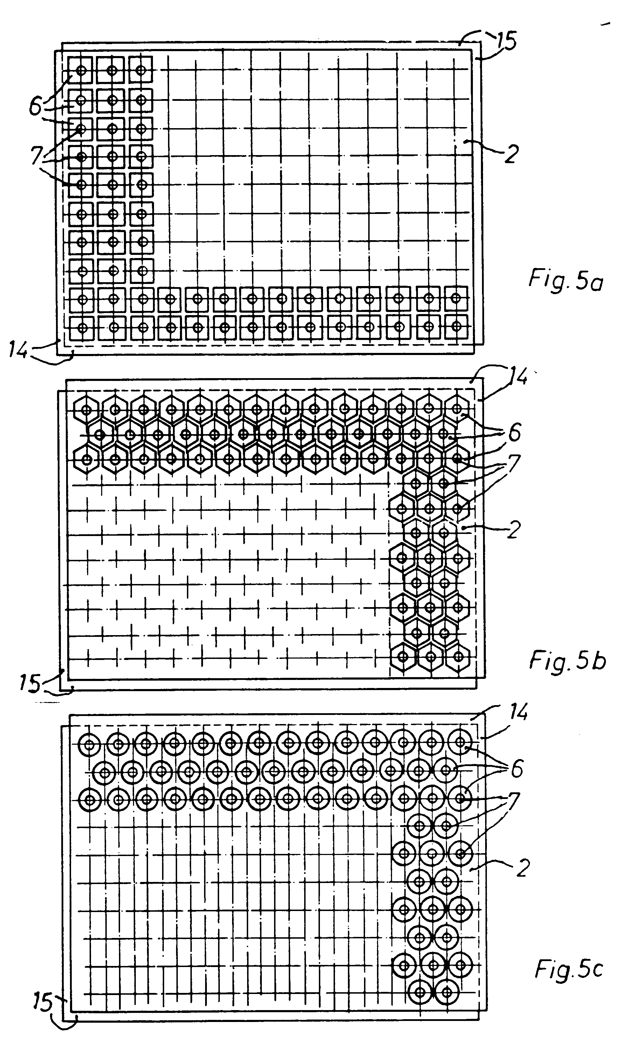

In Fig. 5a bis c ist jeweils eine Draufsicht auf eine Ausführungsform einer Trägerplatte 2 in stark verkleinertem Maßstab gezeigt. Die Trägerplatten 2 sind rechteckig und weisen vorzugsweise Kantenlängen von 750 bzw. 1000 mm auf.

Die Ausführungsform der Fig. 5a weist Wasserspeicherkammern 6 auf, deren Füllkörper pyramidenstumpfförmig sind und die in Fig. 4a gezeigt sind. Die Ausführungsform der Fig. 5b weist Wasserspeicherkammern 6 mit wabenförmigem Querschnitt auf; diese Ausführungsform erreicht bei verhältnismäßig großer Festigkeit ein besonders hohes Wasserspeichervermögen der Trägerplatte 2. Die Ausführungsform der Fig. 5c weist Wasserspeicherkammern 6 mit rundem Querschnitt auf, wie sie etwa in Fig. 3 gezeigt sind; diese Trägerplatte weist besonders dicke Wandstärken auf und ist somit ganz besonders tragfähig.

Wie bereits aus den Fig. 5a und 5c ersichtlich, weisen zwei benachbarte Kanten der Trägerplatte 2 eine überstehende Leiste auf, zu der komplementär die beiden anderen Kanten so ausgebildet sind, daß sie beim Aneinandersetzen der Trägerplatten 2 die Leiste 14 übergreifen.

In Fig. 6a ist eine erste Ausführungsform einer solchen Abdichtung zwischen zwei benachbarten Trägerplatten 2 gezeigt, mit einer Leiste 14, mit im wesentlichen rechteckigem Querschnitt, die etwa halb so hoch ist wie die Trägerplatte 2, während die komplementäre Ausbildung 15 den gleichen Querschnitt aufweist wie die Leiste 14, jedoch an der Unterseite der Trägerplatte 2 angeordnet ist.

In der Ausführungsform der Fig. 6b sind sowohl die Leiste 14 als auch die komplementäre Ausbildung 15 mit einem im wesentlichen L-förmigen Querschnitt ausgebildet, wobei jeweils ein Schenkel nach unten bzw-oben weist; wenn derartige Trägerplatten 2 nebeneinandergelegt werden, dann über- und hintergreift die Leiste 14 die komplementäre Ausbildung 15 und bildet eine Labyrinthdichtung, welche das Durchsickern von Wasser wirksam verhindert.

Die Erfindung bezieht sich ausdrücklich auch auf die Trägerplatte selbst mit oder ohne Füllkörper in ihren Wasserspeicherkammern sowie mit oder ohne Wurzelverankerungsschicht.
Die Trägerplatte ist bevorzugt 750 mm breit, 1000 mm lang und 100 mm hoch, was sich als vorteilhaft erwiesen hat.

**Patentansprüche**

1.  Substratanordnung zur Dachbegrünung, mit
    -   mindestens einer verrottungssicheren Trägerplatte, die nach oben offene, von tragenden Wänden begrenzte Wasserspeicherkammern aufweist,
    -   einer Dränagezone, die unter der Trägerplatte angeordnet ist und die bevorzugt von an der Trägerplatte angeformten Stützfüßen durchdrungen ist,
    -   einer Einrichtung zum Ableiten überschüssigen Wassers aus den Wasserspeicherkammern in den Dränagezone,
    -   einer oberhalb der Trägerplatte angeordneten Schicht aus Vegetationssubstrat, und
    -   einer Filtereinrichtung, um das Wegschwemmen von Material aus dem Vegetationssubstrat in die Dränagezone zu verhindern,
        dadurch **gekennzeichnet,**
    -   daß die Wasserspeicherkammern (6) mit einem Füllkörper aus verrottungssicherem, offenporigem, wasseraufsaugendem Schaumstoff ausgefüllt sind, der im wesentlichen bündig mit der Oberkante der tragenden Wände (10) abschließt,
    -   daß die dem Vegetationssubstrat (1) zugewandte Fläche der Füllkörper perforiert ist oder Porenöffnungen aufweist, und
    -   daß die Wasserspeicherkammern (6) durch Öffnungen (7) im Boden der Trägerplatte (2) mit der Dränagezone (2) verbunden sind.

2.  Substratanordnung nach Anspruch 1, dadurch gekennzeichnet, daß sich die Wände (10) nach unten hin verbreitern.

3.  Substratanordnung nach einem der Ansprüche 1 oder 2, dadurch gekennzeichnet, daß die Wasserspeicherkammern (6) quadratischen (Fig. 5a), wabenförmigen (Fig. 5b) oder runden (Fig. 5c) Querschnitt aufweisen und bevorzugt an den bodenseitigen Kanten ausgerundet sind.

4.  Substratanordnung nach einem der Ansprüche 1 bis 3, dadurch gekennzeichnet, daß mindestens ein Teil, vorzugsweise alle der Wasserspeicherkammern (6) in ihrem Boden jeweils eine Öffnung aufweisen.

5.  Substratanordnung nach einem der Ansprüche 1 bis 4, dadurch gekennzeichnet, daß oberhalb der Wasserspeicherkammern (6) eine gitterartige, bevorzugt aus einem verrottungsfreien grobmaschigen Gewebe, Gewirk oder Gitter vorzugsweise aus Kunststoff, besonders aus einem Polyolefin, gebildete Wurzelverankerungsschicht (5) angeordnet ist.

6.  Substratanordnung nach Anspruch 5, dadurch gekennzeichnet, daß die Füllkörper fest in der Trägerplatte (2) verankert sind, und daß die Wurzelverankerungsschicht (5) an der Oberseite der Füllkörper befestigt ist.

7.  Substratanordnung nach Anspruch 6, dadurch gekennzeichnet, daß unter der Trägerplatte (2) und gegebenenfalls oberhalb einer offenporigen Dränageschicht (9), die in der Dränagezone (3) angeordnet ist, an den Stoßstellen zwischen den einzelnen Trägerplatten (2) eine Filterschicht (8) angeordnet ist.

8. Substratanordnung nach Anspruch 6, dadurch gekennzeichnet, daß die Größe der Porenöffnungen des Füllkörpers an der dem Vegetationssubstrat (1) zugewandten oder abgewandten Seite filterstabil gegenüber dem Vegetationssubstrat (1) ist.

9. Substratanordnung nach einem der Ansprüche 1 bis 8, dadurch gekennzeichnet, daß die Trägerplatte (2) aus hartem Schaumstoff, vorzugsweise aus Polystyrolschaum, besteht.

10. Substratanordnung nach einem der Ansprüche 1 bis 8, dadurch gekennzeichnet, daß die Trägerplatte (2) aus einer Kunststoffplatte besteht, in welcher die Wasserspeicherkammern (6) als Ausstülpungen eingeformt sind.

11. Substratanordnung nach einem der Ansprüche 1 bis 10, dadurch gekennzeichnet, daß die Füllkörper aus offenporigem Polyurethanschaum bestehen.

12. Substratanordnung nach einem der Ansprüche 1 bis 11, dadurch gekennzeichnet, daß zwei benachbarte Kanten der quadratischen oder rechteckigen Trägerplatte (2) eine an deren Oberseite überstehende Leiste (14) aufweisen, und daß die beiden anderen Kanten an der Unterseite eine zur Leiste (14) komplementäre solche Ausbildung (15) aufweisen, daß benachbarte Trägerplatten (2) einander dichtend über- bzw. untergreifen.

13. Substratanordnung nach einem der Ansprüche 1 bis 12, dadurch gekennzeichnet, daß die Wände (10) zwischen zwei benachbarten Wasserspeicherkammern (6) in ihrer freien Kante eine Einkerbung (13) aufweisen.

14. Verfahren zur Herstellung einer Substratanordnung nach einem der Ansprüche 1 bis 13, dadurch gekennzeichnet,
   - daß eine Trägerplatte aus Kunststoffschaum, oder aus einer Kunststoffplatte oder aus ungeschäumtem Kunststoff geformt wird, wobei die Wasserspeicherkammern am Boden Öffnungen aufweisen,
   - daß die Trägerplatte mit ihren Öffnungen auf eine Anti-Haft-Folie aufgelegt wird,
   - daß die Wasserspeicherkammern mit Füllmaterial so ausgeschäumt werden, daß sie mindestens vollständig gefüllt sind,
   - daß bei der gegebenenfalls an der freien Oberseite des Füllkörpers gebildeten Haut die Poren geöffnet oder Perforierungen eingebracht werden, und
   - daß nach dem Ausschäumen der Wasserspeicherkammern die Anti-Haft-Folie von den Öffnungen entfernt wird.

15. Verfahren nach Anspruch 14, dadurch gekennzeichnet, daß die Perforierungen in die Haut durch Nadelwalzen eingebracht werden.

16. Verfahren nach einem der Ansprüche 14 und 15, dadurch gekennzeichnet, daß die Wurzelverankerungsschicht vor oder nach dem Ausschäumen der Wasserspeicherkammern über diese gelegt wird und entweder beim durch die Wurzelverankerungsschicht hindurch erfolgenden Ausschäumen niedergehalten oder in den noch nicht ausgehärteten Schaum eingedrückt wird.

17. Verfahren nach einem der Ansprüche 14 bis 16, dadurch gekennzeichnet, daß beim Ausschäumen der Schaum in kontinuierlichem Strom aus einem Misch- und Dosierkopf den relativ zu diesen bewegten Wasserspeicherkammern zugeführt wird.

18. Trägerplatte für eine Substratanordnung zur Dachbegrünung, die nach oben offene, von tragenden Wänden begrenzte Wasserspeicherkammern und eine Einrichtung zum Ableiten überschüssigen Wassers aus dieser in eine Dränagezone aufweist sowie vorzugsweise aus verrrottungssicherem Material besteht, für eine Substratanordnung nach einem der Ansprüche 1 bis 13, dadurch gekennzeichnet,
   - daß die Wasserspeicherkammern (6) mit einem Füllkörper aus verrottungssicherem, offenporigem, wasseraufsaugendem Schaumstoff ausgefüllt sind, der im wesentlichen bündig mit der Oberkante der tragenden Wände abschließt,
   - daß die bestimmungsgemäß dem Vegetationssubstrat (1) zugewandte Fläche der Füllkörper perforiert ist oder Porenöffnungen aufweist, und
   - daß die Wasserspeicherkammern (6) durch Öffnungen (7) im Boden der Trägerplatte (2) mit der Dränagezone (3) verbunden sind.

**Claims**

1. Substrate arrangement for roof gardening, with
   - at least one rot-proof carrier plate which has upwardly open water storage chambers defined by supporting walls,
   - a drainage area which is disposed under the carrier plate with, passing through it, supporting feet which are preferably moulded on the carrier plate,
   - a device for draining excess water from the water storage chambers into the drainage area,
   - a layer of vegetation substrate disposed above the carrier plate, and
   - a filtering device to prevent material from the vegetation substrate from floating away into the drainage area, characterized in that,
   - the water storage chambers (6) are filled with a filler of rot-proof, open-pore, water-absorbing foam material which lies closingly substantially flush with the upper side of the supporting walls (10),
   - the surface of the filler facing the vegetation substrate (1) is perforated or has pore openings, and
   - the water storage chambers (6) are connected by means of openings (7) in the bottom of the carrier plate (2) with the drainage area (3).

2. Substrate arrangement according to claim 1, characterized in that the walls (10) widen downwards.

3. Substrate arrangement according to either claim 1 or 2, characterized in that the water storage chambers (6) are of square (Fig. 5a), honeycomb (Fig. 5b) or round (Fig. 5c) shaped cross-section and are preferably rounded off at the bottom edges.

4. Substrate arrangement according to one of claims 1 to 3, characterized in that at least one part, preferably all the water storage chambers (6) have respectively one opening at the bottom.

5. Substrate arrangement according to one of claims 1 to 4, characterized in that above the water storage chambers (6) a grid-like root anchoring layer (5) is disposed, preferably made in a rot-proof wide-mesh fabric, material or grid, preferably in plastic. particularly in a polyolefin.

6. Substrate arrangement according to claim 5, characterized in that the filling material is rigidly anchored in the carrier plate (2), and in that the root anchoring layer (5) is secured to the upper side of the filling body.

7. Substrate arrangement according to claim 6, characterized in that a filtering layer (8) is placed under the carrier plate (2) and possibly above an open-pored drainage layer (9) which is provided in the drainage area (3), at the joints between the individual carrier plates (2).

8. Substrate arrangement according to claim 6, characterized in that the size of the pore openings of the filling body on the side facing towards or facing away from the vegetation substrate (1) is filtering-stable relative to the vegetation substrate.

9. Substrate arrangement according to one of claims 1 to 8, characterized in that the carrier plate (2) is in a hard foamed material, preferably polystyrol foam.

10. Substrate arrangement according to one of claims 1 to 8, characterized in that the carrier plate (2) consists in a plastic plate in which the water storage chambers (6) are hollowed out.

11. Substrate arrangement according to one of claims 1 to 10, characterized in that the filling bodies consist in open-pored polyurethane foam.

12. Substrate arrangement according to one of claims 1 to 11, characterized in that two adjacent edges of the square or rectangular carrier plate (2) have a strip (14) protruding on their upper side, and in that the other two edges have on their underside a formation complementary to the strip (14) such adjacent carrier plates (2) sealingly engage each other from above or below.

13. Substrate according to one of claims 1 to 12, characterized in that the walls (10) have a notch (13) in their free edge between two adjacent water storage chambers (6).

14. Process for the manufacture of a substrate arrangement according to one of claims 1 to 13, characterized in
    - that a carrier plate is formed in plastic foam, or in a plastic plate or in unfoamed plastic, the water storage chambers having openings at the bottom;
    - that the carrier plate with its openings is laid on an anti-adherence sheet;
    - that the water storage chambers are foamed up with filler material in such a way that they are at least completely filled;

- that on the skin possibly formed on the free upper side of the filling body the pores are open or perforations made, and
- that after the foaming up of the water storage chambers the anti-adherence sheet is removed.

15. Process according to claim 14, characterized in that the perforations are made into the skin by needle rolling.

16. Process according to either claim 14 or 15, characterized in that the root anchoring layer is laid over the water storage chambers before or after they are foamed up and is either kept down throughout the foaming taking place through the root anchoring layer, or is pressed into the not yet hardened foam.

17. Process according to one of claims 14 to 16, characterized in that during foaming the foam is supplied in continuous flow from a mixing and dosing head to the water storage chambers moved relative thereto,

18. Carrier plate for a substrate arrangement for roof gardening which has upwardly-open water storage chambers defined by supporting walls and a device for draining excess water out of them into a drainage area, and consists preferably of root-proof material, for a substrate arrangement according to one of claims 1 to 13, characterized in

- that the water storage chambers (6) are filled with a filler of rot-proof, open-pore, water-absorbing foam material which lies closingly substantially flush with the upper side of the supporting walls (10);
- that the surface of the filler specifically facing the vegetation substrate (1) is perforated or has pore openings, and
- that the water storage chambers (6) are connected by means of openings (7) in the bottom of the carrier plate (2) with the drainage area (3).

**Revendications**

1. Substrat pour l'aménagement d'espaces verts sur les toitures, comportant
   - au moins une plaque-support imputrescible qui présente des chambres de réserve d'eau ouvertes vers le haut et délimitées par des parois portantes,

- une zone de drainage ménagée en sous-face de la plaque-support et pénétrée de préférence par des pieds de support formés sur ladite plaque de support,
- un dispositif pour évacuer l'eau excédentaire des chambres de réserve d'eau dans la zone de drainage,
- une couche de substrat de végétation disposée au-dessus de la plaque-support et
- un dispositif de filtrage pour éviter l'entraînement de matière du substrat de végétation dans la zone de drainage,
   caractérisé en ce que :
   - les chambres de réserve d'eau (6) sont remplies avec un corps de remplissage en mousse hydrophile, à pores ouverts et imputrescible, qui finit autant dire à franc-bord avec le bord supérieur des parois portantes (10),
   - la face des corps de remplissage orientée vers le substrat de végétation (1) est perforée ou présente des interstices de pores et en ce que
   - les chambres de réserve d'eau (6) communiquent avec la zone de drainage (3) par des ouvertures (7) au fond de la plaque-support (2).

2. Substrat suivant la revendication 1, caractérisé en ce que les parois (10) s'élargissent en direction du bas.

3. Substrat suivant l'une des revendications 1 ou 2, caractérisé en ce que les chambres de réserve d'eau (6) ont une section carrée (fig. 5a), alvéolée (fig. 5b) ou ronde (fig. 5c) et sont de préférence arrondies au niveau des bords côté fond.

4. Substrat suivant l'une des revendications 1 à 3, caractérisé en ce qu'au moins une et de préférence toutes les parties des chambres de réserve d'eau (6) présentent une ouverture en leur fond.

5. Substrat suivant l'une des revendications 1 à 4, caractérisé en ce qu'une couche d'ancrage des racines (5) du genre grillage, de préférence en tissu, tricot ou treillis imputrescible à mailles grossières, formée de préférence en matière plastique, en particulier en polyoléfine, est disposée au-dessus des chambres de réserve d'eau (6).

6. Substrat suivant la revendication 5, caractérisé en ce que le corps de remplissage est ancré solidement dans la plaque-support (2) et en ce que la couche d'ancrage des racines (5) est fixée à la face supérieure des corps de remplissage.

7. Substrat suivant la revendication 6, caractérisé en ce qu'une couche de filtrage (8) est disposée sous la plaque-support (2), aux jointures des différentes plaques-supports (2) et éventuellement au-dessus d'une couche de drainage (9) à pores ouverts qui est disposée dans la zone de drainage (3).

8. Substrat suivant la revendication 6, caractérisé en ce que la grosseur des pores du corps de remplissage est stabilisée par le filtre par rapport au substrat de végétation (1) sur la face orientée vers ou à l'opposé du substrat de végétation (1).

9. Substrat suivant l'une des revendications 1 à 8, caractérisé en ce que la plaque-support (2) est réalisée en mousse dure, de préférence en mousse de polystyrène.

10. Substrat suivant l'une des revendications 1 à 8, caractérisé en ce que la plaque-support (2) consiste en une plaque de plastique dans laquelle les chambres de réserve d'eau (6) affectent la forme d'excroissances.

11. Substrat suivant l'une des revendications 1 à 10, caractérisé en ce que les corps de remplissage sont réalisés en mousse de polyuréthanne à pores ouverts.

12. Substrat suivant l'une des revendications 1 à 11, caractérisé en ce que deux bords contigus de la plaque-support (2) carrée ou rectangulaire présentent un rebord (14) en saillie sur leur face supérieure, et en ce que les deux autres bords présentent un talon (15) de forme complémentaire du rebord (14) tendant à amener des plaques-support (2) contiguës en prise mutuellement jointive par le haut et par le bas.

13. Substrat suivant l'une des revendications 1 à 12, caractérisé en ce que les parois (10) séparant deux chambres de réserve d'eau (6) contiguës entre elles présentent une rainure (13) dans leur bord libre.

14. Procédé de fabrication d'un substrat suivant l'une des revendications 1 à 13, caractérisé
- en ce qu'une plaque-support est formée en mousse plastique, ou en une plaque en plastique ou en plastique non moussé, les chambres de réserve d'eau présentant des ouvertures en leur fond,
- en ce que la plaque-support est posée avec ses ouvertures sur une feuille anti-adhésive,
- en ce que les chambres de réserve d'eau sont chargées par moussage de matière de remplissage de manière à être au moins totalement remplies,
- en ce que sur la peau éventuellement formée sur la face supérieure libre du corps de remplissage, les pores sont ouverts ou des perforations sont apportées,
- en ce que la feuille anti-adhésive est enlevée des ouvertures après le garnissage des chambres de réserve d'eau.

15. Procédé suivant la revendication 14, caractérisé en ce que les perforations dans la peau sont produites au moyen de cylindres à aiguilles (picots).

16. Procédé suivant l'une des revendications 14 et 15, caractérisé en ce que la couche d'ancrage des racines est posée par-dessus les chambres de réserve d'eau avant ou après leur garnissage de mousse et est soit maintenue vers le bas lors du moussage à travers la couche d'ancrage des racines, soit enfoncée dans la mousse qui n'est pas encore durcie.

17. Procédé suivant l'une des revendications 14 à 16, caractérisé en ce qu'au moment du moussage, la mousse est amenée en courant continu à partir d'une tête de mélange et de dosage aux chambres de réserve d'eau animées d'un mouvement relatif par rapport à celle-ci.

18. plaque-support destinée à un substrat pour l'aménagement d'espaces verts sur les toitures, qui présente des chambres de réserve d'eau ouvertes vers le haut et délimitées par des parois portantes, et un dispositif d'évacuation de l'eau excédentaire hors de celles-ci dans une zone de drainage, et qui est réalisée de préférence en matière imputrescible, pour un substrat suivant l'une des revendications 1 à 13, caractérisée
- en ce que les chambres de réserve d'eau (6) sont remplies d'un corps de remplissage en mousse imputrescible, à pores ouverts et hydrophile, qui finit autant dire en affleurement avec le bord supérieur des parois portantes,
- en ce que la surface des corps de remplissage orientée vers le substrat (1) est perforée ou présente des ouvertures de pores et
- en ce que les chambres de réserve d'eau (6) communiquent avec la zone de drainage (3) par des ouvertures (7) au fond de la plaque-support (2).

Fig. 1

Fig.2

Fig.3

Fig.6a

Fig.6 b

Fig.4a

Fig.4 b

Fig. 5a

Fig. 5b

Fig. 5c